# EUROPÄISCHE PATENTSCHRIFT

(11) **EP 3 686 763 B1**
(45) Veröffentlichungstag und Bekanntmachung des Hinweises auf die Patenterteilung: **24.03.2021**
(21) Anmeldenummer: 19152948.6
(22) Anmeldetag: 22.01.2019
(51) Int. Cl.: G06F 21/60, G06F 21/71, G06F 21/76

(54) **COMPUTER-IMPLEMENTIERTE VORRICHTUNG UND VERFAHREN ZUM VERARBEITEN VON DATEN**
COMPUTER-IMPLEMENTED DEVICE AND METHOD FOR PROCESSING DATA
DISPOSITIF MIS EN OEUVRE PAR ORDINATEUR ET PROCÉDÉ DE TRAITEMENT DES DONNÉES

(43) Veröffentlichungstag der Anmeldung: 29.07.2020
(73) Patentinhaber: Siemens Aktiengesellschaft, 80333 München (DE)
(72) Erfinder: Falk, Rainer, 85586 Poing (DE); Feist, Christian Peter, 80689 München (DE)

(56) Entgegenhaltungen:
- DE-A1-102009 013 332
- DE-A1-102012 215 011
- DE-A1-102015 206 643

## Beschreibung

Die vorliegende Erfindung betrifft eine computer-implementierte Vorrichtung, ein Verfahren sowie ein Computerprogrammprodukt zum Verarbeiten von Daten.

Das technische Gebiet der vorliegenden Erfindung betrifft das Verarbeiten von Daten, insbesondere das Verarbeiten von Daten mittels eines rekonfigurierbaren Teils eines Digital-Bausteins.

Von einem Basis-Softwaresystem, wie einem Betriebssystem, unabhängig installierbare und aktualisierbare Applikationen ("Apps"), wie sie von Mobiltelefonen bekannt sind, werden künftig auch von industriellen Geräten, wie beispielsweise einem IoT-Device (IoT; Internet-of-Things), einer speicherprogrammierbaren Steuerung (SPS) oder einem Server, unterstützt. Dabei können echtzeitkritische und besonders sicherheitsrelevante Funktionen, wie insbesondere Cloud Robotik, Antriebssteuerungen, Energienetzüberwachungen, als Applikation realisiert werden.

Um echtzeitkritische und sicherheitsrelevante Funktionen umzusetzen, werden im Stand der Technik insbesondere sogenannte Hardware-Applikationen verwendet. Eine Hardware-Applikation wird dabei in einen rekonfigurierbaren Teil eines Digital-Bausteins, wie beispielsweise einem FPGA ("Field Programmable Gate Array") oder einem CPLD ("Complex Programmable Logic Device") geladen.

Weiterhin ist aus dem Stand der Technik bekannt, dass einer in den FPGA geladenen Digitalschaltung eine eindeutige Seriennummer des FPGAs als ein Hardware-Identifikator bereitgestellt wird. Ferner ist bekannt, zumindest einen Teil des FPGAs, den sogenannten rekonfigurierbaren Teil, zu rekonfigurieren (partielle Rekonfiguration). Dabei wird der rekonfigurierbare Teil durch ein Laden eines partiellen Bitstreams, wie beispielsweise der Hardware-Applikation, aktualisiert, während die restliche Digitalschaltung des FPGAs operativ bleibt, also regulär weiterarbeitet.

Bekanntermaßen werden Software-Applikationen auf Mobiltelefonen unterschiedliche Identifikatoren bereitgestellt, die beispielsweise zum Tracken von Nutzern verwendbar sind. Ferner sind persistente Geräte-Identifikatoren, wie die MAC-Adresse ("Media-Access-Control-Adresse") eines Netzwerkadapters oder die IMEI ("International Mobile Station Equipment Identity") eines Mobilfunkmodems, bekannt. Ebenso gibt es verschiedene Identifikatoren, die beispielsweise eindeutig für eine Software-Applikation sind, die einem Nutzer eines Gerätes zugeordnet werden können und die mittels eines Containers, der kryptografische Schlüssel und digitale Signaturen umfasst, bereitgestellt werden.

Die DE 10 2009 013332 A1 offenbart Verfahren und Schaltkreise zum Erzeugen eines kryptografischen Schlüssels, zum Verschlüsseln und Entschlüsseln von Daten mit dem erzeugten kryptografischen Schlüssel und zum Speichern und Lesen der verschlüsselten Daten unter Verwendung eines Dateinamens, der einer laufenden Anwendung einer mobilen Computeranwendung unbekannt ist.

Die DE 10 2015 206643 A1 offenbart eine Vorrichtung zum Erzeugen eines Schlüssels in einem programmierbaren Hardwaremodul.

Die DE 10 2012 215011 A1 offenbart ein Verfahren und eine Vorrichtung zum Sichern einer Steuerungseinheit eines Gerätes

Vor diesem Hintergrund besteht eine Aufgabe der vorliegenden Erfindung darin, die Sicherheit der Verarbeitung von Daten unter Verwendung eines Digital-Bausteins zu verbessern.

Gemäß einem ersten Aspekt wird eine computer-implementierte Vorrichtung zum Verarbeiten von Daten mit einem Digital-Baustein mit zumindest einem durch eine Anzahl N von Konfigurations-Beschreibungen rekonfigurierbaren Teil, mit N ≥ 1, einer bestimmten Konfigurations-Beschreibung aus der Anzahl N zum Rekonfigurieren des rekonfigurierbaren Teils, und einer Bereitstellungs-Einheit zum Bereitstellen eines für die bestimmte Konfigurations-Beschreibung spezifischen Identifikators unter Verwendung einer Anzahl A von Ableitungsparametern umfassend die bestimmte Konfigurations-Beschreibung, mit A ≥ 1, vorgeschlagen, wobei der mit der bestimmten Konfigurations-Beschreibung rekonfigurierte Teil dazu eingerichtet ist, eine kryptografische Funktion auf bestimmte Daten unter Verwendung des bereitgestellten spezifischen Identifikators zur Generierung kryptografisch verarbeiteter Daten auszuführen

Dabei ist die Bereitstellungs-Einheit dazu eingerichtet, einen für eine Gruppe von bestimmten Konfigurations-Beschreibungen spezifischen Identifikator bereitzustellen und einen Hashwert als den für die Gruppe von bestimmten Konfigurations-Beschreibungen spezifischen Identifikator durch Anwenden einer bestimmten Hashfunktion auf die Gruppe von bestimmten KonfigurationsBeschreibungen zu bilden.

Die vorliegende Vorrichtung erlaubt es, in einfacher Art und Weise einer Konfigurations-Beschreibung und einer Gruppe von bestimmten Konfigurations-Beschreibungen einen für die bestimmte Konfigurations-Beschreibung und oder Gruppe von bestimmten Konfigurationsbeschreibungen spezifischen Identifikator bereitzustellen. Mittels des rekonfigurierbaren Teils des Digital-Bausteins ist es anschließend möglich, eine kryptografische Funktion auf bestimmte Daten unter Verwendung des bereitgestellten spezifischen Identifikators zur Generierung kryptografisch verarbeiteter Daten durchzuführen.

Hierdurch ist es möglich, sicherheitsrelevante Funktionen, wie beispielsweise einen Schlüsselspeicher ("Trust Anchor") als Hardware-Applikation (Konfigurations-Beschreibung) zu realisieren. Der für die bestimmte Konfigurations-Beschreibung spezifische Identifikator steht dabei nur dieser bestimmten Konfigurations-Beschreibung auf einem Digital-Baustein zur Verfügung. Dies hat den Vorteil, dass die Sicherheit bei der Verarbeitung von Daten in Digital-Bausteinen erhöht wird, da sicherheitsrelevante Hardware-Applikationen realisiert werden können, bei denen eine Manipulation der Parameter der Hardware-Applikationen durch die ausgeführte Software, wie beispielswiese einer Software-Applikation, einer Laufzeitumgebung oder einem Betriebssystem, verhindert wird.

Der Digital-Baustein ist insbesondere als ein FPGA ("Field Programmable Gate Array"), als ein CPLD ("Complex Programmable Logic Device") oder als ein virtueller FPGA ausgebildet. Der virtuelle FPGA ist vorzugsweise als ein ASIC/SoC ("Application-specific Integrated Circuit", "System-on-a-chip") ausgebildet, bei welchem ein oder mehrere rekonfigurierbaren Teile beispielsweise herstellerseitig bereits innerhalb des Digital-Bausteins vorgesehen sind und zu einem späteren Zeitpunkt konfigurierbar sind. Der Digital-Baustein umfasst insbesondere zumindest einen rekonfigurierbaren Teil.

Die Konfigurations-Beschreibung ist insbesondere ein Bitstream. Der Bitstream ist vorzugsweise eine Sequenz von Bits von bestimmter Länge. Der Bitstream umfasst beispielsweise einen Basis-Bitstream und einen partiellen Bitstream. Der Basis-Bitstream wird insbesondere dazu verwendet, alle Teile, welche den Digital-Baustein umfassen, also auch den zumindest einen rekonfigurierbaren Teil, einmalig initial zu konfigurieren. Der partielle Bitstream weist insbesondere Informationen zur Konfiguration eines rekonfigurierbaren Teils des Digital-Bausteins auf und wird insbesondere dazu verwendet, den rekonfigurierbaren Teil des Digital-Bausteins beliebig oft zu rekonfigurieren. Die Konfigurations-Beschreibung kann auch als Hardware-Applikation bezeichnet werden, da diese innerhalb des Digital-Bausteins, wie dem FPGA (Hardware), verwendet wird. Die Konfigurations-Beschreibung definiert insbesondere die Konfiguration des Digital-Bausteins vollständig (Basis-Bitstream) oder teilweise (partieller Bitstream).

Unter dem Rekonfigurieren des Digital-Bausteins wird insbesondere ein Rekonfigurieren des rekonfigurierbaren Teils des FPGAs (Digital-Bausteins) verstanden. Das Rekonfigurieren als auch das Konfigurieren umfassen ein Laden einer Digitalschaltung in den Digital-Baustein, wobei die Digitalschaltung innerhalb der Konfigurations-Beschreibung angeordnet ist und somit Teil des Bitstreams ist.

Das Bereitstellen, welches durch die Bereitstellungs-Einheit durchgeführt wird, umfasst insbesondere ein Generieren oder ein Erzeugen und ein anschließendes Bereitstellen des für die bestimmte Konfigurations-Beschreibung spezifischen Identifikators oder der spezifischen Identifikatoren. Beispielsweise werden einer bestimmten Konfigurations-Beschreibung mehrere spezifische Identifikatoren bereitgestellt. Insbesondere wird der für die bestimmte Konfigurations-Beschreibung spezifische Identifikator unter Verwendung eines Hardware-Identifikators des Digital-Bausteins sowie der bestimmten Konfigurations-Beschreibung gebildet. Dadurch wird insbesondere ein Identifikator bereitgestellt, der spezifisch für ein bestimmtes Exemplar des Digital-Bausteins und die bestimmte Konfigurations-Beschreibung ist. Vorzugsweise ist es jedoch möglich, zusätzlich oder alternativ einen spezifischen Identifikator bereitzustellen, der nur spezifisch für die bestimmte Konfigurations-Beschreibung ist, aber unspezifisch für das bestimmte Exemplar des Digital-Bausteins. Der Identifikator kann insbesondere spezifisch für den geladenen Basis-Bitstream sein.

Die jeweilige Einheit, zum Beispiel die Bereitstellungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die kryptografische Funktion umfasst beispielsweise ein kryptografisches Verschlüsseln, ein kryptografisches Entschlüsseln und/oder ein digitales Signieren zum Verarbeiten und/oder Generieren kryptografisch verarbeiteter Daten. Vorzugsweise werden die oben aufgeführten kryptografischen Funktionen unter Verwendung von kryptografischen Schlüsseln realisiert.

Ein kryptografischer Schlüssel kann als symmetrischer Schlüssel, als öffentlicher Schlüssel und/oder als privater Schlüssel ausgebildet sein.

Die computer-implementierte Vorrichtung umfasst vorzugsweise eine Software-Laufzeitumgebung, die dazu eingerichtet ist, eine Umgebung zum Ausführen einer Software bereitzustellen. Die Software ist beispielsweise ein Betriebssystem, welches innerhalb der Software-Laufzeitumgebung ausgeführt wird, um die computer-implementierte Vorrichtung zu betreiben. Die Software-Laufzeitumgebung umfasst insbesondere eine Software-Applikation und stellt eine Umgebung zur Verfügung, in welcher zumindest ein Digital-Baustein mit einer Konfigurations-Beschreibung betrieben werden kann. Eine Software-Applikation ist insbesondere ein vom Betriebssystem unabhängiges Programm, mit welchem verschiedene Anwendungen und Funktionen realisiert werden können. Ein mittels der Bereitstellungs-Einheit bereitgestellter spezifischer Identifikator ist insbesondere spezifisch für eine Software-Applikation.

Gemäß einer Ausführungsform ist die Bereitstellungs-Einheit dazu eingerichtet, den für die bestimmte Konfigurations-Beschreibung bereitgestellten spezifischen Identifikator innerhalb des Digital-Bausteins zu bilden.

Durch das Bilden des für die bestimmte Konfigurations-Beschreibung bereitgestellten spezifischen Identifikators innerhalb des Digital-Bausteins wird der spezifische Identifikator ausschließlich innerhalb des Digital-Bausteins und au-ßerhalb der Software sowie der Software-Applikation gebildet.

Dies hat den Vorteil, dass Manipulationen des für die bestimmte Konfigurations-Beschreibung spezifischen Identifikators oder der spezifischen Identifikatoren durch Software oder Software-Applikationen verhindert werden können und ferner verhindert werden kann, dass die Parameter des spezifischen Identifikators oder der spezifischen Identifikatoren über unbefugte Software-Applikationen zugänglich sind. Dadurch lassen sich sicherheitsrelevante bestimmte Konfigurations-Beschreibungen realisieren, bei denen eine Manipulation der sicherheitsrelevanten Ableitungsparameter durch die ausgeführte Software oder Software-Applikation verhindert wird. Somit erhöht sich die Sicherheit beim Bilden des für die bestimmte Konfigurations-Beschreibung bereitgestellten spezifischen Identifikators sowie bei der Verarbeitung von Daten mittels des Digital-Bausteins unter Verwendung des Identifikators.

Gemäß einer weiteren Ausführungsform umfasst die Vorrichtung zusätzlich zu dem Digital-Baustein eine Verarbeitungs-Einrichtung, die dazu eingerichtet ist, den rekonfigurierbaren Teil unter Verwendung der bestimmten Konfigurations-Beschreibung zur Laufzeit zu rekonfigurieren.

Insbesondere werden bei der Entwicklung eines Digital-Bausteins, wie beispielsweise einem FPGA, einem System on Chip mit programmierbarer Logik und Software-CPUs oder einem ASIC mit eingebettetem FPGA, spezielle veränderbare Regionen, die sogenannten rekonfigurierbaren Teile innerhalb des Digital-Bausteins festgelegt.

Die in diesen rekonfigurierbaren Teilen implementierten Digitalschaltungen lassen sich im laufenden Betrieb (zur Laufzeit) neu konfigurieren (rekonfigurieren), ohne die restliche Digitalschaltung des FPGAs zu beeinflussen. Somit wird insbesondere eine Konfigurations-Beschreibung als partieller Bitstream für einen solchen rekonfigurierbaren Teil realisiert und zur Laufzeit geladen und/oder instanziiert, ohne dass dabei erforderlich ist, die restliche Digitalschaltung des Digital-Bausteins anzuhalten und/oder neu zu konfigurieren.

Diese Ausführungsform weist den Vorteil auf, dass die Leistungsaufnahme des Digital-Bausteins durch Deaktivieren von unbenötigten Schaltungsteilen reduziert werden kann. Weiterhin können Anwendungen auf dem Digital-Baustein realisiert werden, die im laufenden Betrieb Änderungen der Digitalschaltung oder der Schaltungslogik erfordern. Dies erhöht die Flexibilität, Performanz und die Benutzerfreundlichkeit der Vorrichtung.

Die Rekonfiguration des rekonfigurierbaren Teils zur Laufzeit kann auch als ein dynamisches Rekonfigurieren bezeichnet werden.

Gemäß einer weiteren Ausführungsform ist die Bereitstellungs-Einheit dazu eingerichtet, einen Hashwert als den spezifischen Identifikator durch Anwenden einer bestimmten Hashfunktion auf die bestimmte Konfigurations-Beschreibung zu bilden.

Der Hashwert ist insbesondere eine Bitfolge mit einer bestimmten Länge, beispielsweise 128 Bit, 160 Bit, 256 Bit, 384 Bit, oder auch 512 Bit. Der Hashwert lässt sich beispielsweise mittels einer Hashfunktion aus einer bestimmten Konfigurations-Beschreibung erzeugen oder berechnen. Die Hashfunktion bildet dabei die Konfigurations-Beschreibung auf den Hashwert mit fester Länge ab. Diese Abbildung ist vorzugsweise eindeutig. Eine solche Hashfunktion wird beispielsweise als kollisionsresistent bezeichnet. Hierunter wird insbesondere verstanden, dass es keine zwei sich unterscheidende Bitstreams gibt, die den gleichen Hashwert ergeben. Der Hashwert eines bestimmten Bitstreams kann daher auch als "fingerprint" (Fingerabdruck) bezeichnet werden. Beispiele von Hashfunktionen, auch als Hash-Algorithmen bezeichnet, sind MD5, SHA-1, SHA-2 oder SHA-3. Beispielsweise bezeichnet SHA-256 den SHA-2 Hash-Algorithmus, wobei ein jeweiliger Hashwert eine Länge von 256 Bit aufweist. Ein Hashwert kann auch als Schlüssel genutzt werden. Hierbei wird insbesondere unter Verwendung des als Hashwert verwendeten Schlüssels eine Schlüsselableitungsfunktion, wie HMAC-SHA256, gebildet.

Gemäß dem ersten Aspekt ist die Bereitstellungs-Einheit dazu eingerichtet, einen für eine Gruppe von bestimmten Konfigurations-Beschreibungen spezifischen Identifikator bereitzustellen.

Eine Gruppe von bestimmten Konfigurations-Beschreibungen umfasst insbesondere zumindest zwei bestimmte Konfigurations-Beschreibungen. Die bestimmten Konfigurations-Beschreibungen der Gruppe sind beispielsweise unterschiedlich ausgebildet. Insbesondere werden zumindest zwei unterschiedlichen bestimmten Konfigurations-Beschreibungen ein spezifischer gleicher Identifikator bereitgestellt. Hierbei spricht man von einem eindeutigen spezifischen Identifikator. Es kann auch eine eineindeutige Abbildung zwischen den Konfigurations-Beschreibungen und den spezifischen Identifikatoren verwendet werden. Vorzugsweise wird einer Gruppe von bestimmten Konfigurations-Beschreibungen ein für die Gruppe von bestimmten Konfigurations-Beschreibungen spezifischer Identifikator bereitgestellt.

Insbesondere umfasst die Gruppe zumindest eine bestimmte Konfigurations-Beschreibung und zumindest eine der bestimmten Konfigurations-Beschreibung zugeordnete Software-Applikation.

Gemäß dem ersten Aspekt ist die Bereitstellungs-Einheit dazu eingerichtet, einen Hashwert als den für die Gruppe von bestimmten Konfigurations-Beschreibungen spezifischen Identifikator durch Anwenden einer bestimmten Hashfunktion auf die Gruppe von bestimmten Konfigurations-Beschreibungen zu bilden.

Insbesondere werden die bestimmten Konfigurations-Beschreibungen konkateniert und anschließend wird die bestimmte Hashfunktion auf die konkatenierten bestimmten Konfigurations-Beschreibungen zur Bildung des für die Gruppe spezifischen Identifikators angewendet.

Insbesondere erfolgt das Bilden des Hashwertes für die Gruppe von bestimmten Konfigurations-Beschreibungen unter Verwendung eines "Rekonfigurations- und Update-Managers" (RUM).

Gemäß einer weiteren Ausführungsform ist die Bereitstellungs-Einheit ferner dazu eingerichtet, einen jeweiligen eindeutigen Hashwert für ein jeweiliges die Gruppe von bestimmten Konfigurations-Beschreibungen umfassendes Datenpaket zu bilden.
Das Datenpaket umfasst insbesondere mehrere bestimmte Konfigurations-Beschreibungen. Weiterhin kann das Datenpaket auch eine oder mehrere den bestimmten Konfigurations-Beschreibungen zugeordneten Software-Applikationen und/oder Meta-Daten beinhalten. Die mehreren bestimmten Konfigurations-Beschreibungen werden vorzugsweise zu einer Gruppe zusammengeführt. Unter Verwendung der bestimmten Konfigurations-Beschreibungen der Gruppe, also des Datenpakets, wird insbesondere ein Hashwert gebildet, welcher eindeutig für das Datenpaket ist. Innerhalb der Gruppe wird jeder bestimmten Konfigurations-Beschreibung beispielsweise der gleiche Hashwert, also der gleiche spezifische Identifikator bereitgestellt. Insbesondere werden die einzelnen bestimmten Konfigurations-Beschreibungen des Datenpaktes konkateniert. Vorzugsweise wird anhand der konkatenierten bestimmten KonfigurationsBeschreibungen, also des zusammengefügten Bitstreams aus dem gebildeten konkatenierten Bitstream, ein Hashwert gebildet.

Weiterhin ist es möglich, dass beispielsweise ein Hashwert von jeder bestimmten Konfigurations-Beschreibung durch Anwenden einer Hashfunktion auf die jeweilige bestimmte Konfigurations-Beschreibung gebildet wird. Anschließend werden die Hashwerte der bestimmten Konfigurations-Beschreibungen konkateniert und ein gemeinsamer Hashwert wird mittels Anwendung der Hashfunktion auf die konkatenierten Hashwerte gebildet.

Gemäß einer weiteren Ausführungsform umfasst die Anzahl A von Ableitungsparametern ferner einen oder mehrere Werte aus einem Sicherheitselement, einen geheimen Geräteparameter, eine physikalische Geräteeigenschaft, die beispielsweise mittels eines Analog-Digital-Wandlers oder mittels einer Physical Unclonable Function (PUF) ermittelbar ist, einen kryptografischen Schlüssel, einen kryptografischen Startwert und/oder einen Schlüsselgenerierungsparameter.

Das Sicherheitselement ("Secure Element") ist insbesondere eine Hardware-Plattform, mittels welcher sicherheitsrelevante und kryptografische Daten gespeichert werden und Applikationen sicher ausgeführt werden können. Die Verwendung des Sicherheitselements fließt vorzugsweise in die Bildung eines Ableitungsparameters mit ein.

Gemäß einer weiteren Ausführungsform ist die Bereitstellungs-Einheit dazu eingerichtet, einen Hashwert als den spezifischen Identifikator durch Anwenden einer bestimmten Hashfunktion auf die bestimmte Konfigurations-Beschreibung und zumindest einen weiteren aus der Anzahl A von Ableitungsparametern zu bilden.

Gemäß einer weiteren Ausführungsform ist die Bereitstellungs-Einheit dazu eingerichtet, einen Hashwert als den für die Gruppe von bestimmten Konfigurations-Beschreibungen spezifischen Identifikator durch Anwenden einer bestimmten Hashfunktion auf die Gruppe von bestimmten Konfigurations-Beschreibungen und zumindest einen weiteren aus der Anzahl A von Ableitungsparametern zu bilden.

Insbesondere ist es möglich, ein Verschlüsselungs- und Entschlüsselungssystem basierend auf zumindest zwei der bestimmten Konfigurations-Beschreibungen und zumindest einer Software-Applikation bereitzustellen. Hierbei wird beispielweise sowohl einer ersten bestimmten Konfigurations-Beschreibung, als auch einer zweiten bestimmten Konfigurations-Beschreibung ein für die beiden Konfigurations-Beschreibungen spezifischer Identifikator bereitgestellt, welcher zur Ableitung eines gemeinsamen kryptographischen Schlüssels verwendet werden kann. Die erste bestimmte Konfigurations-Beschreibung wird insbesondere zum Verschlüsseln verwendet, während die zweite bestimmte Konfigurations-Beschreibung vorzugsweise zum Entschlüsseln verwendet wird, wobei die Ver- und Entschlüsselung insbesondere unter Verwendung des gemeinsamen kryptografischen Schlüssels erfolgt. Insbesondere ist die Software-Applikation dazu eingerichtet, die Ver- und Entschlüsselung der bestimmten Daten unter Verwendung des Digital-Bausteins durchführen zu lassen.

Vorzugsweise wird bei der Bereitstellung eines für eine erste bestimmte Konfigurations-Beschreibung spezifischen ersten Identifikators mittels eines Ableitungsparameter ein kryptografischer Schlüssel zum Verschlüsseln, wie beispielsweise ein öffentlicher Schlüssel eines Public-Key-Kryptoverfahrens, von bestimmten Daten in den ersten Identifikator mit eingebunden, während vorzugsweise bei der Bereitstellung eines für eine zweite bestimmte Konfigurations-Beschreibung spezifischen zweiten Identifikators mittels eines Ableitungsparameter ein kryptografischer Schlüssel, insbesondere ein privater Schlüssel eines Public-Key-Kryptoverfahrens, zum Entschlüsseln der kryptografisch verarbeiteten Daten in den zweiten Identifikator mit eingebunden wird.

Weiterhin können die Schlüssel des Public-Key-Kryptoverfahrens auch, anstelle einer Verschlüsselung, für die Generierung einer digitalen Signatur durch eine erste bestimmte Konfigurations-Beschreibung und Überprüfung einer digitalen Signatur durch eine zweite bestimmte Konfigurations-Beschreibung verwendet werden.

Insbesondere umfasst die Anzahl A von Ableitungsparametern weiterhin Metadaten, wie ein Manifest, welches innerhalb zumindest einer bestimmten Konfigurations-Beschreibung einer Gruppe von bestimmten Konfigurations-Beschreibungen oder eines Datenpakets angeordnet ist, sowie einen Ableitungsparameter, welcher der der bestimmten Konfigurations-Beschreibung zugeordneten Software-Applikation zugeordnet ist. Zusätzlich umfasst die Anzahl A von Ableitungsparametern vorzugsweise einen öffentlichen Schlüssel oder ein digitales Zertifikat, mit welchem das Datenpaket signiert wird, oder beispielsweise einen Benutzer-Identifikator, einen Gruppen-Identifikator oder ein vorgegebenes Sicherheits-Label, unter welchem die Software-Applikation innerhalb der Software-Laufzeitumgebung ausgeführt wird.

Gemäß einer weiteren Ausführungsform umfasst die Verarbeitungs-Einrichtung eine Software-Applikation und eine Schnittstelle zum Verbinden der Software-Applikation und des rekonfigurierbaren Teils, wobei die Software-Applikation dazu eingerichtet ist, zumindest eine Operation unter Verwendung der Schnittstelle auf dem rekonfigurierbaren Teil durchzuführen.

Dies hat beispielsweise den technischen Effekt, dass die Software-Applikation Operationen auf dem rekonfigurierbaren Teil des Digital-Bausteins ausführen kann. Daher erhöht sich die Flexibilität der Bedienung der computer-implementierten Vorrichtung.

Weiterhin ist die Software-Applikation insbesondere dazu eingerichtet, die ihr zugeordneten rekonfigurierbaren Teile neu zu rekonfigurieren und diese für bestimmte Zwecke zu verwenden, wie beispielsweise die Auslagerung von bestimmten Berechnungen in Hardware zur Entlastung der CPU und/oder die Aufteilung komplexer Hardware in mehrere rekonfigurierbare Teile, um Ressourcen des Digital-Bausteins einsparen zu können.

Vorzugsweise weist die computer-implementierte Vorrichtung eine persistente Speicher-Einrichtung, welche mit der Verarbeitungs-Einrichtung verbunden ist, und zumindest den einen Digital-Baustein auf.

Die Verarbeitungs-Einrichtung umfasst insbesondere den Rekonfigurations- und Update-Manager (RUM), welcher beispielsweise dazu eingerichtet ist, ein Starten der Software-Applikation, ein Bilden eines für die bestimmte Konfigurations-Beschreibung spezifischen Identifikators und/oder ein Zuordnen einer oder mehrerer rekonfigurierbaren Teile zu einer Software-Applikation durchzuführen. Der RUM ist vorzugsweise außerhalb der Software-Applikation und des Digital-Bausteins angeordnet.

Beispielsweise weist der Digital-Baustein ferner einen Logik-Baustein auf, welcher über einen Treiber-Baustein innerhalb der Verarbeitungs-Einrichtung mit dem RUM verbunden ist. Insbesondere ist der Logik-Baustein dazu eingerichtet, in Abhängigkeit der bestimmten Konfigurations-Beschreibung und einem Hardware-Identifikator des Digital-Bausteins mittels einer Hashfunktion, wie der SHA256, einen für die bestimmte Konfigurations-Beschreibung spezifischen Identifikator zu bilden. Das Bilden des spezifischen Identifikators wird hierbei insbesondere durch den Logik-Baustein durchgeführt.

Zusätzlich und/oder alternativ ist der Logik-Baustein dazu eingerichtet, insbesondere mittels eines Geräteschlüssels des Digital-Bausteins einen für die bestimmte Konfigurations-Beschreibung spezifischen Identifikator zu bilden.

Vorzugsweise wird der für die bestimmte Konfigurations-Beschreibung spezifische Identifikator dem rekonfigurierbaren Teil über ein App-Register bereitgestellt. Das App-Register ist insbesondere Teil des Digital-Bausteins.

Beispielsweise ist die Software-Applikation dazu eingerichtet, mehrere bestimmte Konfigurations-Beschreibungen in mehreren rekonfigurierbaren Teilen eines Digital-Bausteins zu verwalten. Alternativ können sich mehrere Software-Applikationen mehrere bestimmte Konfigurations-Beschreibungen in einem Digital-Baustein teilen.

Insbesondere wird ein für die bestimmte Konfigurations-Beschreibung spezifischer Identifikator unter Verwendung des Treiber-Bausteins gebildet und dem Logik-Baustein innerhalb des Digital-Bausteins bereitgestellt. Der Logik-Baustein wiederum stellt mittels des App-Registers einem oder mehreren rekonfigurierbaren Teilen den für die bestimmte Konfigurations-Beschreibung spezifischen Identifikator bereit.

Beispielsweise ist ein mehrstufiges Bilden eines für die bestimmte Konfigurations-Beschreibung spezifischen Identifikators möglich, bei welchem Teilschritte durch den RUM, durch den Treiber-Baustein und/oder durch den Logik-Baustein erfolgen.

Gemäß einer weiteren Ausführungsform beinhaltet der Digital-Baustein einen konfigurierbaren Teil, welcher den zumindest einen rekonfigurierbaren Teil umfasst, wobei die Verarbeitungs-Einrichtung dazu eingerichtet ist, den konfigurierbaren Teil zu einem bestimmten Zeitpunkt unter Verwendung einer der Anzahl N von Konfigurations-Beschreibungen initial zu konfigurieren.

Insbesondere umfasst das Konfigurieren ein initiales Konfigurieren sowie ein Rekonfigurieren. Insbesondere wird das initiale Konfigurieren einmalig in der Fertigung oder bei jedem Gerätestart durchgeführt. Vorzugsweise bildet der konfigurierbare Teil umfassend den Digital-Baustein aus. Der konfigurierbare Teil des Digital-Bausteins weist beispielsweise mehrere rekonfigurierbare Teile auf.

Der bestimmte Zeitpunkt umfasst insbesondere einen Zeitpunkt nach der Produktion des Digital-Bausteins, vor der Verwendung des Digital-Bausteins, bei der erstmaligen Inbetriebnahme des Digital-Bausteins und/oder bei jedem Neustart der Vorrichtung. Letzterer Fall wird insbesondere bei FPGAs mit flüchtiger Speichertechnologie, wie beispielsweise SRAM ("Static Random-Access Memory"), verwendet.

Gemäß einer weiteren Ausführungsform ist die computer-implementierte Vorrichtung als ein Feldgerät, als ein Steuergerät, als ein Überwachungsgerät, als ein IoT-Device, als ein Edge Cloud Device, als ein Cloud Server oder als ein App-enabled Time Server ausgebildet.

Gemäß einem zweiten Aspekt wird ein Verfahren zum Betreiben einer computer-implementierten Vorrichtung, die einen Digital-Baustein mit zumindest einem durch eine Anzahl N von Konfigurations-Beschreibungen rekonfigurierbaren Teil umfasst, vorgeschlagen. Das Verfahren weist die folgenden Schritte auf:
a) Laden einer bestimmten Konfigurations-Beschreibung aus der Anzahl N zum Rekonfigurieren des rekonfigurierbaren Teils,
b) Bereitstellen eines für die bestimmte Konfigurations-Beschreibung spezifischen Identifikators unter Verwendung einer Anzahl A von Ableitungsparametern umfassend die bestimmte Konfigurations-Beschreibung, mit A ≥ 1, und
c) Ausführen einer kryptografischen Funktion auf bestimmte Daten unter Verwendung des bereitgestellten spezifischen Identifikators mittels des mit der bestimmten Konfigurations-Beschreibung rekonfigurierten Teils zur Generierung kryptografisch verarbeiteter Daten.

Gemäß einem dritten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines ersten Ausführungsbeispiels einer computer-implementierten Vorrichtung zum Verarbeiten von Daten;
- Fig. 2: zeigt ein schematisches Blockdiagramm eines zweiten Ausführungsbeispiels einer computer-implementierten Vorrichtung zum Verarbeiten von Daten mit einem Digital-Baustein und einer Verarbeitungs-Einrichtung; und
- Fig. 3: zeigt ein schematisches Ablaufdiagramm eines Ausführungsbeispiels eines Verfahrens zum Betreiben einer computer-implementierten Vorrichtung.

In den Figuren sind gleiche oder funktionsgleiche Elemente mit denselben Bezugszeichen versehen worden, sofern nichts anderes angegeben ist.

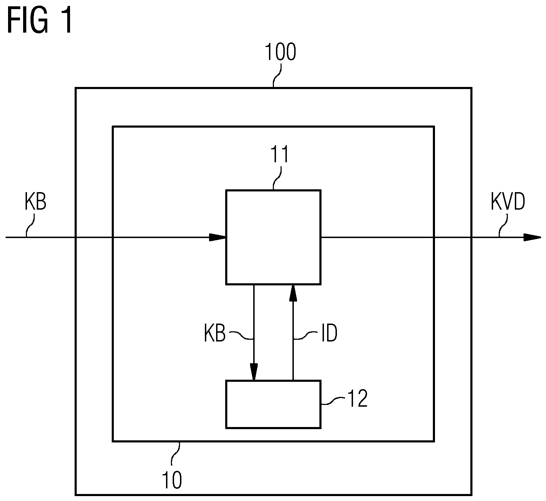

Fig. 1 zeigt ein schematisches Blockdiagramm eines ersten Ausführungsbeispiels einer computer-implementierten Vorrichtung 100 zum Verarbeiten von Daten. Die computer-implementierte Vorrichtung 100 umfasst einen Digital-Baustein 10 mit zumindest einem durch eine Anzahl N von Konfigurations-Beschreibungen KB rekonfigurierbaren Teil 11, mit N ≥ 1, und eine bestimmte Konfigurations-Beschreibung KB aus der Anzahl N zum Rekonfigurieren des rekonfigurierbaren Teils 11. Weiterhin umfasst die computer-implementierte Vorrichtung 100 eine Bereitstellungs-Einheit 12.

Die Bereitstellungs-Einheit 12 ist dazu eingerichtet, einen für die bestimmte Konfigurations-Beschreibung KB spezifischen Identifikator ID unter Verwendung einer Anzahl A von Ableitungsparametern, welche die bestimmte Konfigurations-Beschreibung KB, mit A ≥ 1, umfassen, bereitzustellen. Ferner ist der mit der bestimmten Konfigurations-Beschreibung KB rekonfigurierte Teil 11 dazu eingerichtet, eine kryptografische Funktion auf bestimmte Daten unter Verwendung des bereitgestellten spezifischen Identifikators ID zur Generierung kryptografisch verarbeiteter Daten KVD auszuführen.
Wie in Fig. 1 dargestellt, ist die Bereitstellungs-Einheit 12 insbesondere dazu eingerichtet, den für die bestimmte Konfigurations-Beschreibung KB bereitgestellten spezifischen Identifikator ID innerhalb des Digital-Bausteins 10 zu bilden. Ferner ist die Bereitstellungs-Einheit 12 beispielsweise dazu eingerichtet, den für die bestimmte Konfigurations-Beschreibung KB bereitgestellten spezifischen Identifikator ID außerhalb (nicht dargestellt) des Digital-Bausteins 10 zu bilden.

Die Bereitstellungs-Einheit 12 ist vorzugsweise dazu eingerichtet, einen Hashwert als den spezifischen Identifikator ID durch Anwenden einer bestimmten Hashfunktion auf die bestimmte Konfigurations-Beschreibung KB zu bilden.

Beispielsweise ist die Bereitstellungs-Einheit 12 dazu eingerichtet, einen für eine Gruppe von bestimmten Konfigurations-Beschreibungen KB spezifischen Identifikator ID bereitzustellen.

Weiterhin ist die Bereitstellungs-Einheit 12 insbesondere dazu eingerichtet, einen Hashwert als den für die Gruppe von bestimmten Konfigurations-Beschreibungen KB spezifischen Identifikator ID durch Anwenden einer bestimmten Hashfunktion auf die Gruppe von bestimmten Konfigurations-Beschreibungen KB zu bilden.

Vorzugsweise ist die Bereitstellungs-Einheit 12 dazu eingerichtet, einen jeweiligen eindeutigen Hashwert für ein jeweiliges die Gruppe von bestimmten Konfigurations-Beschreibungen KB umfassendes Datenpaket zu bilden. Das Datenpaket kann dabei insbesondere auch eine oder mehrere Software-Applikationen und Meta-Daten, wie beispielsweise ein App-Manifest, umfassen.

Ferner umfasst die Anzahl A von Ableitungsparametern beispielsweise einen oder mehrere Werte aus einem Sicherheitselement, einen geheimen Geräteparameter, eine physikalische Geräteeigenschaft, einen kryptografischen Schlüssel, einen kryptografischen Startwert und/oder einen Schlüsselgenerierungsparameter.

Insbesondere ist die Bereitstellungs-Einheit 12 dazu eingerichtet, einen Hashwert als den spezifischen Identifikator ID durch Anwenden einer bestimmten Hashfunktion auf die bestimmte Konfigurations-Beschreibung KB und zumindest einen weiteren aus der Anzahl A von Ableitungsparametern zu bilden.

Vorzugsweise ist die Bereitstellungs-Einheit 12 dazu eingerichtet, einen Hashwert als den für die Gruppe von bestimmten Konfigurations-Beschreibungen KB spezifischen Identifikator ID durch Anwenden einer bestimmten Hashfunktion auf die Gruppe von bestimmten Konfigurations-Beschreibungen KB und zumindest einen weiteren aus der Anzahl A von Ableitungsparametern zu bilden.

Der Digital-Baustein 10 beinhaltet beispielsweise einen konfigurierbaren Teil, welcher den zumindest einen rekonfigurierbaren Teil 11 umfasst. Weiterhin ist die Verarbeitungs-Einrichtung 13 insbesondere dazu eingerichtet, den konfigurierbaren Teil zu einem bestimmten Zeitpunkt unter Verwendung einer der Anzahl N von Konfigurations-Beschreibungen KB initial zu konfigurieren.

Die computer-implementierte Vorrichtung 100 ist vorzugsweise als ein Feldgerät, als ein Steuergerät, als ein Überwachungsgerät, als ein IoT-Device, als ein Edge Cloud Device, als ein Cloud Server oder als ein App-enabled Time Server ausgebildet.

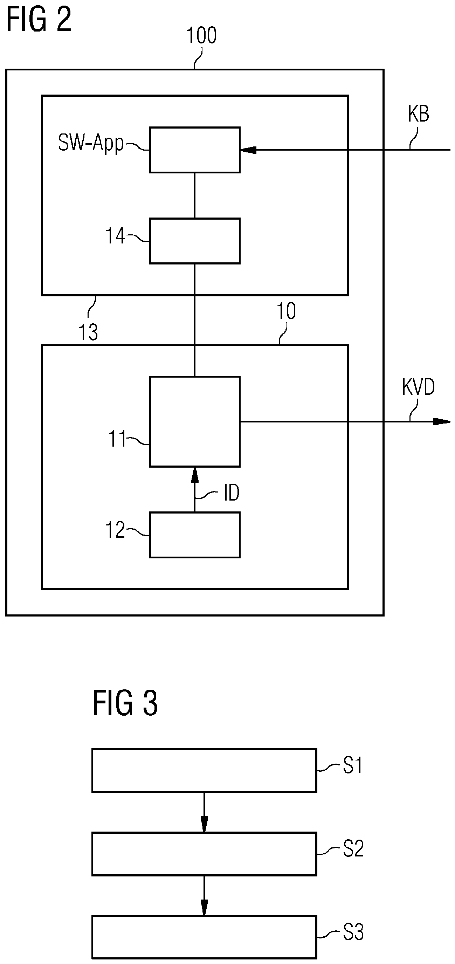

Fig. 2 zeigt ein schematisches Blockdiagramm eines zweiten Ausführungsbeispiels einer computer-implementierten Vorrichtung 100 zum Verarbeiten von Daten. Das zweite Ausführungsbeispiel der Fig. 2 basiert auf dem ersten Ausführungsbeispiel der Fig. 1 und weist sämtliche Merkmale des ersten Ausführungsbeispiels auf. Darüber hinaus weist die computer-implementierte Vorrichtung 100 der Fig. 2 eine Verarbeitungs-Einrichtung 13 auf.

Die Verarbeitungs-Einrichtung 13 ist dazu eingerichtet, den rekonfigurierbaren Teil 11 unter Verwendung der bestimmten Konfigurations-Beschreibung KB zur Laufzeit zu rekonfigurieren.

Vorzugsweise umfasst die Verarbeitungs-Einrichtung 13 eine Software-Applikation SW-APP und eine Schnittstelle 14 zum Verbinden der Software-Applikation SW-APP und des rekonfigurierbaren Teils 11. Die Software-Applikation SW-APP ist beispielsweise dazu eingerichtet, zumindest eine Operation unter Verwendung der Schnittstelle 14 auf dem rekonfigurierbaren Teil 11 durchzuführen. Dabei stellt die Software-App SW-APP über die Schnittstelle 14 dem rekonfigurierbaren Teil 11 zumindest die bestimmte Konfigurations-Beschreibung KB bereit. Die Bereitstellungs-Einheit 12, welche insbesondere als ein Logik-Baustein ausgebildet ist, ist vorzugsweise dazu eingerichtet, einen für die bestimmte Konfigurations-Beschreibung KB spezifischen Identifikator ID dem rekonfigurierbaren Teil 11 mittelbar oder unmittelbar bereitzustellen.

Fig. 3 zeigt ein schematisches Ablaufdiagramm eines Ausführungsbeispiels eines Verfahrens zum Betreiben einer Computer-implementierten Vorrichtung 100 nach Fig. 1 oder nach Fig. 2. Die computer-implementierte Vorrichtung 100 umfasst einen Digital-Baustein 10 mit zumindest einem durch eine Anzahl N von Konfigurations-Beschreibungen KB rekonfigurierbaren Teil 11.

Das Ausführungsbeispiel der Fig. 3 umfasst die folgenden Verfahrensschritte S1 bis S3:

In dem Schritt S1 wird eine bestimmte Konfigurations-Beschreibung KB aus der Anzahl N zum Rekonfigurieren des rekonfigurierbaren Teils 11 geladen.

In dem Schritt S2 wird ein für die bestimmte Konfigurations-Beschreibung KB spezifischer Identifikator ID unter Verwendung einer Anzahl A von Ableitungsparametern umfassend die bestimmte Konfigurations-Beschreibung KB, mit A ≥ 1, bereitgestellt.

In dem Schritt S3 wird eine kryptografische Funktion auf bestimmte Daten unter Verwendung des bereitgestellten spezifischen Identifikators ID mittels des mit der bestimmten Konfigurations-Beschreibung KB rekonfigurierten Teils 11 zur Generierung kryptografisch verarbeiteter Daten KVD ausgeführt.

Obwohl die vorliegende Erfindung anhand von Ausführungsbeispielen beschrieben wurde, ist sie vielfältig modifizierbar.

## Patentansprüche

1. Computer-implementierte Vorrichtung (100) zum Verarbeiten von Daten, mit
einem Digital-Baustein (10) mit zumindest einem durch eine Anzahl N von Konfigurations-Beschreibungen (KB) rekonfigurierbaren Teil (11), mit N ≥ 1,
einer bestimmten Konfigurations-Beschreibung (KB) aus der Anzahl N zum Rekonfigurieren des rekonfigurierbaren Teils (11), und
einer Bereitstellungs-Einheit (12) zum Bereitstellen eines für die bestimmte Konfigurations-Beschreibung (KB) spezifischen Identifikators (ID) unter Verwendung einer Anzahl A von Ableitungsparametern umfassend die bestimmte Konfigurations-Beschreibung (KB), mit A ≥ 1,
wobei der mit der bestimmten Konfigurations-Beschreibung (KB) rekonfigurierte Teil (11) dazu eingerichtet ist, eine kryptografische Funktion auf bestimmte Daten unter Verwendung des bereitgestellten spezifischen Identifikators (ID) zur Generierung kryptografisch verarbeiteter Daten (KVD) auszuführen, **dadurch gekennzeichnet, dass** die Bereitstellungs-Einheit (12) dazu eingerichtet ist, einen für eine Gruppe von bestimmten Konfigurations-Beschreibungen (KB) spezifischen Identifikator (ID) bereitzustellen und einen Hashwert als den für die Gruppe von bestimmten Konfigurations-Beschreibungen (KB) spezifischen Identifikator (ID) durch Anwenden einer bestimmten Hashfunktion auf die Gruppe von bestimmten Konfigurations-Beschreibungen (KB) zu bilden.

2. Vorrichtung nach Anspruch 1,
**dadurch gekennzeichnet,**
**dass** die Bereitstellungs-Einheit (12) dazu eingerichtet ist, den für die bestimmte Konfigurations-Beschreibung (KB) bereitgestellten spezifischen Identifikator (ID) innerhalb des Digital-Bausteins (10) zu bilden.

3. Vorrichtung nach Anspruch 1 oder 2,
**dadurch gekennzeichnet,**
**dass** die Vorrichtung (100) zusätzlich zu dem Digital-Baustein (10) eine Verarbeitungs-Einrichtung (13) umfasst, die dazu eingerichtet ist, den rekonfigurierbaren Teil (11) unter Verwendung der bestimmten Konfigurations-Beschreibung (KB) zur Laufzeit zu rekonfigurieren.

4. Vorrichtung nach einem der Ansprüche 1 bis 3,
**dadurch gekennzeichnet,**
**dass** die Bereitstellungs-Einheit (12) dazu eingerichtet ist, einen Hashwert als den spezifischen Identifikator (ID) durch Anwenden einer bestimmten Hashfunktion auf die bestimmte Konfigurations-Beschreibung (KB) zu bilden.

5. Vorrichtung nach Anspruch 1,
**dadurch gekennzeichnet,**
**dass** die Bereitstellungs-Einheit (12) ferner dazu eingerichtet ist, einen jeweiligen eindeutigen Hashwert für ein jeweiliges die Gruppe von bestimmten Konfigurations-Beschreibungen (KB) umfassendes Datenpaket zu bilden.

6. Vorrichtung nach einem der Ansprüche 1 bis 5,
**dadurch gekennzeichnet,**
**dass** die Anzahl A von Ableitungsparametern ferner einen oder mehrere Werte aus einem Sicherheitselement, einen geheimen Geräteparameter, eine physikalische Geräteeigenschaft, einen kryptografischen Schlüssel, einen kryptografischen Startwert und/oder einen Schlüsselgenerierungsparameter umfasst.

7. Vorrichtung nach Anspruch 6,
**dadurch gekennzeichnet,**
**dass** die Bereitstellungs-Einheit (12) dazu eingerichtet ist, einen Hashwert als den spezifischen Identifikator (ID) durch Anwenden einer bestimmten Hashfunktion auf die bestimmte Konfigurations-Beschreibung (KB) und zumindest einen weiteren aus der Anzahl A von Ableitungsparametern zu bilden.

8. Vorrichtung nach den Ansprüchen 1 und 6,
**dadurch gekennzeichnet,**
**dass** die Bereitstellungs-Einheit (12) dazu eingerichtet ist, einen Hashwert als den für die Gruppe von bestimmten Konfigurations-Beschreibungen (KB) spezifischen Identifikator (ID) durch Anwenden einer bestimmten Hashfunktion auf die Gruppe von bestimmten Konfigurations-Beschreibungen (KB) und zumindest einen weiteren aus der Anzahl A von Ableitungsparametern zu bilden.

9. Vorrichtung nach einem der Ansprüche 1 bis 8,
**dadurch gekennzeichnet,**
**dass** die Verarbeitungs-Einrichtung (13) eine Software-Applikation (SW-APP) und eine Schnittstelle (14) zum Verbinden der Software-Applikation (SW-APP) und des rekonfigurierbaren Teils (11) umfasst, wobei die Software-Applikation (SW-APP) dazu eingerichtet ist, zumindest eine Operation unter Verwendung der Schnittstelle (14) auf dem rekonfigurierbaren Teil (11) durchzuführen.

10. Vorrichtung nach einem der Ansprüche 3 bis 9,
**dadurch gekennzeichnet,**
**dass** der Digital-Baustein (10) einen konfigurierbaren Teil beinhaltet, welcher den zumindest einen rekonfigurierbaren Teil (11) umfasst, wobei die Verarbeitungs-Einrichtung (13) dazu eingerichtet ist, den konfigurierbaren Teil zu einem bestimmten Zeitpunkt unter Verwendung einer der Anzahl N von Konfigurations-Beschreibungen (KB) initial zu konfigurieren.

11. Vorrichtung nach einem der Ansprüche 1 bis 10,
**dadurch gekennzeichnet,**
**dass** die computer-implementierte Vorrichtung (100) als ein Feldgerät, als ein Steuergerät, als ein Überwachungsgerät, als ein IoT-Device, als ein Edge Cloud Device, als ein Cloud Server oder als ein App-enabled Time Server ausgebildet ist.

12. Verfahren zum Betreiben einer computer-implementierten Vorrichtung (100), die einen Digital-Baustein (10) mit zumindest einem durch eine Anzahl N von Konfigurations-Beschreibungen (KB) rekonfigurierbaren Teil (11) umfasst, mit N ≥ 1, mit den Schritten:
Laden (S1) einer bestimmten Konfigurations-Beschreibung (KB) aus der Anzahl N zum Rekonfigurieren des rekonfigurierbaren Teils (11),
Bereitstellen (S2) eines für die bestimmte Konfigurations-Beschreibung (KB) spezifischen Identifikators (ID) unter Verwendung einer Anzahl A von Ableitungsparametern umfassend die bestimmte Konfigurations-Beschreibung (KB), mit A ≥ 1,
Ausführen (S3) einer kryptografischen Funktion auf bestimmte Daten unter Verwendung des bereitgestellten spezifischen Identifikators (ID) mittels des mit der bestimmten Konfigurations-Beschreibung (KB) rekonfigurierten Teils (11) zur Generierung kryptografisch verarbeiteter Daten (KVD),
**dadurch gekennzeichnet, dass** das Verfahren den folgenden weiteren Schritten umfasst:
Bereitstellen eines für eine Gruppe von bestimmten Konfigurations-Beschreibungen (KB) spezifischen Identifikators (ID),
und Bilden eines Hashwertes als den für die Gruppe von bestimmten Konfigurations-Beschreibungen (KB) spezifischen Identifikator (ID) durch Anwenden einer bestimmten Hashfunktion auf die Gruppe von bestimmten Konfigurations-Beschreibungen (KB).

13. Computerprogrammprodukt, welches auf einer programmgesteuerten Einrichtung die Durchführung des Verfahrens gemäß Anspruch 12 veranlasst.

## Claims

1. Computer-implemented apparatus (100) for processing data, having
a digital chip (10) having at least one part (11) that is reconfigurable by a number N of configuration descriptions (KB), with N ≥ 1,
a determined configuration description (KB) from the number N for reconfiguring the reconfigurable part (11), and
a providing unit (12) for providing an identifier (ID) specific to the determined configuration description (KB) by using a number A of derivation parameters comprising the determined configuration description (KB), with A ≥ 1, wherein the part (11) reconfigured with the determined configuration description (KB) is set up to perform a cryptographic function on determined data by using the provided specific identifier (ID) to generate cryptographically processed data (KVD),
**characterized in that**
the providing unit (12) is set up to provide an identifier (ID) specific to a group of determined configuration descriptions (KB) and to form a hash value as the identifier (ID) specific to the group of determined configuration descriptions (KB) by applying a determined hash function to the group of determined configuration descriptions (KB).

2. Apparatus according to Claim 1,
**characterized**
**in that** the providing unit (12) is set up to form the specific identifier (ID) provided for the determined configuration description (KB) within the digital chip (10) .

3. Apparatus according to Claim 1 or 2,
**characterized**
**in that** the apparatus (100) comprises, in addition to the digital chip (10), a processing device (13) that is set up to reconfigure the reconfigurable part (11) by using the determined configuration description (KB) at runtime.

4. Apparatus according to one of Claims 1 to 3,
**characterized**
**in that** the providing unit (12) is set up to form a hash value as the specific identifier (ID) by applying a determined hash function to the determined configuration description (KB).

5. Apparatus according to Claim 1,
**characterized**
**in that** the providing unit (12) is further set up to form a respective unique hash value for a respective data packet comprising the group of determined configuration descriptions (KB).

6. Apparatus according to one of Claims 1 to 5,
**characterized**
**in that** the number A of derivation parameters further comprises one or more values from a secure element, a secret device parameter, a physical device property, a cryptographic key, a cryptographic starting value and/or a key generation parameter.

7. Apparatus according to Claim 6,
**characterized**
**in that** the providing unit (12) is set up to form a hash value as the specific identifier (ID) by applying a determined hash function to the determined configuration description (KB) and at least one further instance from the number A of derivation parameters.

8. Apparatus according to Claims 1 and 6,
**characterized**
**in that** the providing unit (12) is set up to form a hash value as the identifier (ID) specific to the group of determined configuration descriptions (KB) by applying a determined hash function to the group of determined configuration descriptions (KB) and at least one further instance from the number A of derivation parameters.

9. Apparatus according to one of Claims 1 to 8,
**characterized**
**in that** the processing device (13) comprises a software application (SW-APP) and an interface (14) for connecting the software application (SW-APP) and the reconfigurable part (11), wherein the software application (SW-APP) is set up to perform at least one operation by using the interface (14) on the reconfigurable part (11).

10. Apparatus according to one of Claims 3 to 9,
**characterized**
**in that** the digital chip (10) contains a configurable part that comprises the at least one reconfigurable part (11), wherein the processing device (13) is set up to initially configure the configurable part at a determined time by using one of the number N of configuration descriptions (KB) .

11. Apparatus according to one of Claims 1 to 10,
**characterized**
**in that** the computer-implemented apparatus (100) is in the form of a field device, in the form of a controller, in the form of a monitoring device, in the form of an IoT device, in the form of an edge cloud device, in the form of a cloud server or in the form of an App-enabled time server.

12. Method for operating a computer-implemented apparatus (100) that comprises a digital chip (10) having at least one part (11) that is reconfigurable by a number N of configuration descriptions (KB), with N ≥ 1, having the steps of:
loading (S1) a determined configuration description (KB) from the number N for reconfiguring the reconfigurable part (11) ,
providing (S2) an identifier (ID) specific to the determined configuration description (KB) by using a number A of derivation parameters comprising the determined configuration description (KB), with A ≥ 1,
performing (S3) a cryptographic function on determined data by using the provided specific identifier (ID) by means of the part (11) reconfigured with the determined configuration description (KB) to generate cryptographically processed data (KVD),
**characterized in that** the method comprises the following further steps:
providing an identifier (ID) specific to a group of determined configuration descriptions (KB), and
forming a hash value as the identifier (ID) specific to the group of determined configuration descriptions (KB) by applying a determined hash function to the group of determined configuration descriptions (KB).

13. Computer program product that prompts the performance of the method according to Claim 12 on a program-controlled device.

## Revendications

1. Dispositif (100) mis en œuvre par ordinateur pour le traitement de données, comportant :
un composant numérique (10) avec au moins une partie (11) reconfigurable par un nombre N de descriptions de configuration (KB), avec N ≥ 1,
une description de configuration déterminée (KB) du nombre N pour reconfigurer la partie reconfigurable (11) et
une unité de mise à disposition (12) pour fournir un identifiant (ID) spécifique pour la description de configuration déterminée (KB) en utilisant un nombre A de paramètres de dérivation incluant la description de configuration déterminée (KB), avec A ≥ 1,
la partie (11) reconfigurée avec la description de configuration déterminée (KB) étant configurée pour exécuter une fonction cryptographique sur des données déterminées en utilisant l'identifiant spécifique fourni (ID) pour générer des données traitées cryptographiquement (KVD),
**caractérisé en ce que**
l'unité de mise à disposition (12) est configurée pour fournir un identifiant (ID) spécifique pour un groupe de descriptions de configuration déterminées (KB) et pour former une valeur de hachage en tant qu'identifiant (ID) spécifique pour le groupe de descriptions de configuration déterminées (KB) par application d'une fonction de hachage déterminée au groupe de descriptions de configuration déterminées (KB).

2. Dispositif selon la revendication 1, **caractérisé en ce que** l'unité de mise à disposition (12) est configurée pour former l'identifiant (ID) spécifique fourni pour la description de configuration déterminée (KB) dans le composant numérique (10).

3. Dispositif selon la revendication 1 ou 2, **caractérisé en ce que** le dispositif (100) comprend, en plus du composant numérique (10), un dispositif de traitement (13) qui est configuré pour reconfigurer la partie reconfigurable (11) en utilisant la description de configuration déterminée (KB) pendant le temps de fonctionnement.

4. Dispositif selon l'une des revendications 1 à 3, **caractérisé en ce que** l'unité de mise à disposition (12) est configurée pour former une valeur de hachage en tant qu'identifiant spécifique (ID) par application d'une fonction de hachage déterminée à la description de configuration déterminée (KB).

5. Dispositif selon la revendication 1, **caractérisé en ce que** l'unité de mise à disposition (12) est en outre configurée pour former une valeur de hachage univoque respective pour un paquet de données respectif comprenant le groupe de descriptions de configuration déterminées (KB).

6. Dispositif selon l'une des revendications 1 à 5, **caractérisé en ce que** le nombre A de paramètres de dérivation comprend en outre une ou plusieurs valeurs d'un élément de sécurité, un paramètre d'appareil secret, une caractéristique d'appareil physique, une clé cryptographique, une valeur de départ cryptographique et/ou un paramètre de génération de clé.

7. Dispositif selon la revendication 6, **caractérisé en ce que** l'unité de mise à disposition (12) est configurée pour former une valeur de hachage en tant qu'identifiant spécifique (ID) par application d'une fonction de hachage déterminée à la description de configuration déterminée (KB) et au moins une autre à partir du nombre A de paramètres de dérivation.

8. Dispositif selon les revendications 1 et 6, **caractérisé en ce que** l'unité de mise à disposition (12) est configurée pour former une valeur de hachage en tant qu'identifiant (ID) spécifique pour le groupe de descriptions de configuration déterminées (KB) par application d'une fonction de hachage déterminée au groupe de descriptions de configuration déterminées (KB) et au moins une autre à partir du nombre A de paramètres de dérivation.

9. Dispositif selon l'une des revendications 1 à 8, **caractérisé en ce que** le dispositif de traitement (13) comprend une application logicielle (SW-APP) et une interface (14) pour relier l'application logicielle (SW-APP) et la partie reconfigurable (11), l'application logicielle (SW-APP) étant configurée pour exécuter au moins une opération en utilisant l'interface (14) sur la partie reconfigurable (11).

10. Dispositif selon l'une des revendications 3 à 9, **caractérisé en ce que** le composant numérique (10) comporte une partie configurable qui comprend l'au moins une partie reconfigurable (11), le dispositif de traitement (13) étant configuré pour configurer initialement la partie configurable à un instant déterminé en utilisant une d'un nombre N des descriptions de configuration (KB).

11. Dispositif selon l'une des revendications 1 à 10, **caractérisé en ce que** le dispositif (100) mis en œuvre par ordinateur est réalisé en tant qu'appareil de terrain, en tant qu'appareil de commande, en tant qu'appareil de surveillance, en tant d'appareil IoT, en tant qu'appareil Edge Cloud, en tant que serveur Cloud ou en tant que serveur temporel avec application.

12. Procédé pour faire fonctionner un dispositif (100) mis en œuvre par ordinateur et qui comprend un composant numérique (10) avec au moins une partie (11) reconfigurable par un nombre N de descriptions de configuration (KB), avec N ≥ 1, comportant les étapes :
chargement (S1) d'une description de configuration déterminée (KB) tirée du nombre N pour reconfigurer la partie reconfigurable (11),
mise à disposition (S2) d'un identifiant (ID) spécifique pour la description de configuration déterminée (KB) en utilisant un nombre A de paramètres de dérivation comprenant la description de configuration déterminée (KB), avec A ≥ 1,
exécution (S3) d'une fonction cryptographique sur des données déterminées en utilisant l'identifiant spécifique fourni (ID) au moyen de la partie (11) reconfigurée avec la description de configuration déterminée (KB) pour générer des données traitées cryptographiquement (KVD),
**caractérisé en ce que** le procédé comprend les autres étapes suivantes :
mise à disposition d'un identifiant (ID) spécifique pour un groupe de descriptions de configuration déterminées (KB) et formation d'une valeur de hachage en tant qu'identifiant (ID) spécifique pour le groupe de descriptions de configuration déterminées (KB) par application d'une fonction de hachage déterminée au groupe de descriptions de configuration déterminées (KB).

13. Produit de programme informatique qui fait exécuter le procédé selon la revendication 12 sur un dispositif commandé par programme.
